Europäisches Patentamt

European Patent Office

Office européen des brevets

(19)

(11) **EP 1 128 279 A1**

(12) **EUROPEAN PATENT APPLICATION**

(43) Date of publication:
**29.08.2001 Bulletin 2001/35**

(51) Int Cl.[7]: **G06F 17/30**

(21) Application number: **00103954.4**

(22) Date of filing: **25.02.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **SIEMENS AKTIENGESELLSCHAFT**
**80333 München (DE)**

(72) Inventors:
• **Nikitin, Mikahail**
  **9000 Aalborg (DK)**
• **Hansen, Martin**
  **9000 Aalborg (DK)**

(54) **Method for synchronizing databases stored on portable devices**

(57)      Method for synchronizing a first database stored on a first client device with a second database stored on a second client device by sending entries of the first database from the first client device to the second client device or a server device, wherein a determination is made as to whether an entry needs to be synchronized before sending off the entry from the first client device.

FIG. 7

EP 1 128 279 A1

**Description**

There is a growing need for small portable devices to contain various kinds of data. Furthermore, these data often need to be synchronized with other, similar devices. To perform this synchronization a standard such as the IrMC (Infrared to Mobil Communication) specification version 1.1, which is a method for synchronizing and transferring data between two data units using infrared technology, can be used.

The IrMC describes data transfer at 4 different information exchange levels, number 1 being the simplest. IrMC data transfer at level 4 describes a method of how to synchronize entries between two data units in a client/server manner. Three synchronization levels are defined: "Slow" when a record is added in this log file, "semi-slow synchronisation", and "fast synchronization".

An IrMC level 4 server is capable of maintaining several databases, which are called "object stores". For each object store, the server maintains two log files, a *change log,* and an *information log.* The information log contains general information about the databases, such as the information exchange level, and how many objects an object store can contain. Each record in a change log refers to one entry in the object store (one entry in the database).

Each record in a change log contains the following information:

· ACTION: A variable stating how an entry has been changed. The entry could be deleted or just modified.
· Change counter: A variable stating the number of changes since last reset.
· Timestamp: An optional variable, using a time of change, instead of a change counter (both can be used).
· LUID: Local unique ID, a variable that is able to uniquely identify the entry in question.

Every time a change occurs in the object store, the change is noted in the change log. When a record is added in this log file, the change counter value is raised by one. According to the IrMC specification, the change log holds a maximum of $M_0$ records ($M_0$ is implementation specific). The change log should be large enough to support synchronization with several clients.

It is an object of the present invention to improve synchronization of databases especially for databases stored on portable devices.

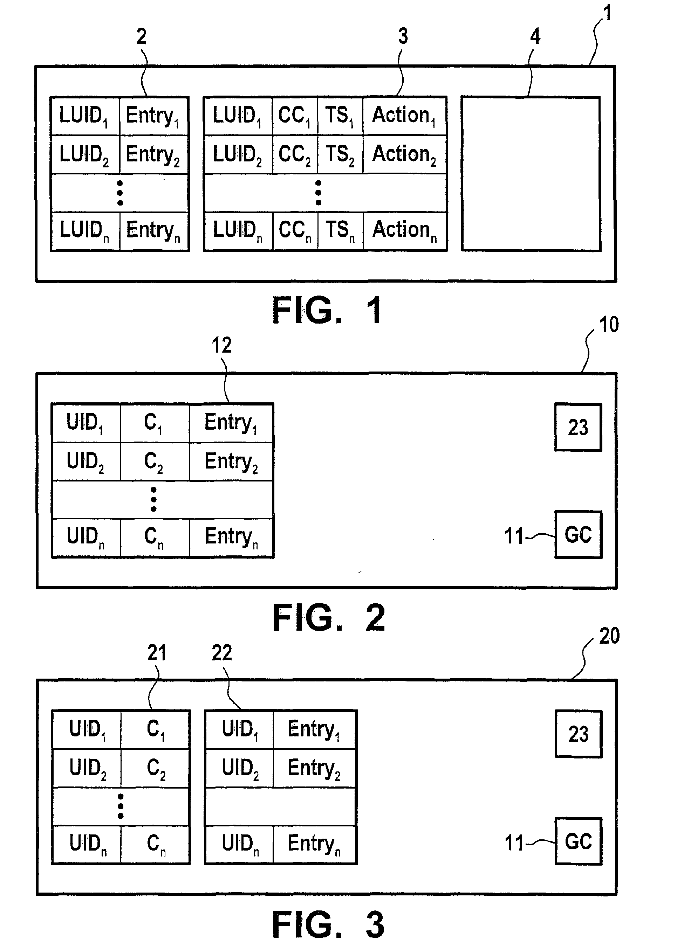

This problem is solved by a method according to claim 1. According to this method for synchronizing a first database being stored on a first client device with a second database being stored on a second client device by sending entries of the first database from the first client device to the second client device, a determination is made as to whether an entry needs to be synchronized before sending the entry off from the first client device. This way it is possible to reduce the communication between the two devices significantly. Preferably the first device and the second client device are portable devices, e.g. a cell phone, especially portable devices where the IrMC specification can be useful. Database in terms of the present invention also can be a part of a database. A database in terms of the present invention is especially referred to as an object store introduced in Fig. 2 and Fig. 3. An entry is especially referred to as user information i.e. information that is used by a user of a client device and/or changed by the user of the first client device.

In a preferred embodiment of the present invention the entry is sent off from the first client device if it needs to be synchronized.

In a further preferred embodiment of the present invention each entry of the first database is related to a stamp wherein the stamps are transferred from the first client device to the server device without their related entries.

The above stated problem can be further solved by a method according to claim 4. According to this method for synchronizing a first database being stored on a first device with a second database being stored on a second client device each entry of the first database is related to a respective stamp, wherein the stamps are transferred from the first device to a server device, e.g. a personal computer, without their related entries. This way it is possible to reduce the communication between the two devices significantly. After the stamps have been transferred preferably a determination is made as to whether an entry needs to be synchronized and wherein the entry is transferred from the first device to the second client device if it needs to be synchronized. Database in terms of the present invention can also be a part of a database. A database in terms of the present invention is especially referred to as an object store introduced in Fig. 2 and Fig. 3. An entry is especially referred to as user information i.e. information that is used by a user of a client device and/or changed by the user of the first client device.

In a further preferred embodiment of the present invention the entry is not transferred from the first device to the second client device if the entry does not need to be synchronized.

In a further preferred embodiment of the present invention the entry of the first database is transferred to the server device or second client device if the value of the stamp that is related to the entry of the first database differs from the value of the stamp that is related to an entry at a former stage of the first database. In a further preferred embodiment of the present invention the value of the stamp that is related to an entry at a formal stage of the first database is stored on the server.

In a further preferred embodiment of the present invention said transferring of the entry of the first database from the first device to the server device or the second client device is done via a wireless or a wired communication link.

In a further preferred embodiment of the present invention said transferring of the entry of the first database from the first device to the server device or the second client device is done via an infrared communication link.

In a further preferred embodiment of the present invention said transferring of the entry of the first database from the first device to the second client device is done by transferring the entry from the first device to the server device and transferring the entry from the server device to the second client device.

The above stated problem can be further solved by a client device according to claim 12 and a server device according to claim 14. Such a (first) client device comprises a first database, wherein an entry of the first database can be related to an entry of a second database stored on a second client device, and wherein entries of the first database and entries of the second database can be synchronized, and wherein the first client divice comprises a global counter and a change unit for changing the global counter every time an entry of the first database is changed. However the global counter may be changed also independently of a change of an entry of the first database.

A server device according to claim 14 is capable of receiving entries of a first database from a first client device, wherein an entry of the first database can be related to an entry of a second database stored on a second client device, wherein entries of the first database and entries of the second database can be synchronized, and wherein said server device comprises a decision unit for determining whether an entry is needed to synchronize the first and the second database.

Further details and preferred embodiments can be found in the following description.

Fig. 1 shows a client device according to the IrMC specification;
Fig. 2 shows an embodiment of an inventive client device;
Fig. 3 shows an alternative embodiment of an inventive client device;
Fig. 4 shows a configuration of client devices which and a server device ;
Fig. 5 shows a flow chart for a change unit;
Fig. 6 shows a flow chart for a change unit;
Fig. 7 shows communiction between a client device and a server device.;
Fig. 8 shows a flow chart for a decision unit;
Fig. 9 shows the difference between the storage requirements of IrMC and the present invention; and
Fig. 10 shows the difference between the communication requirements of IrMC and the present invention.

Fig. 1 shows a client device 1 according to the IrMC specification version 1.1 level 4. On the client device 1 three databases are stored. These databases are an object store 2, a change log 3 and an information log 4. In this example the information log 2 contains n entries: $ENTRY_1$, $ENTRY_2$, ..., $ENTRY_i$,..., $ENTRY_n$. Every $ENTRY_i$ refers to user information, i.e. information which is used and/or changed by a user of the client device 1. Every $ENTRY_i$ of the object log 2 corresponds to a local unique identification $LUID_i$. Each record in the change log 3 contains a local unique identification $LUID_i$, a change counter $CC_i$, a timestamp $TS_i$ and an action variable $ACTION_i$. The change counter $CC_i$ is a variable stating the number of changes since last reset. The timestamp $TS_i$ is a variable stating the time of the last change of $ENTRY_i$. The action variable $ACTION_i$ is a variable stating how $ENTRY_i$ has been changed. So the action variable $ACTION_i$ states whether $ENTRY_i$ has been added, deleted or just modified.

The information log contains general information about the databases (object store) such as the information exchange level and how many entries an object store can contain. Each record in a change log refers to an entry in the object store.

According to the IrMC specification version 1.1 level 4 the action variable $ACTION_i$ and the local unique identification $LUID_i$ are mandatory. The change counter $CC_i$ is highly recommended but not mandatory, if the change log 3 contains the timestamp $TS_i$. The timestamp $TS_i$ is highly recommended but not mandatory, if the change counter $CC_i$ is given in the change log 3.

Fig. 2 shows an embodiment of an inventive client device 10. This client device 10 comprises an extended object store 12 and a storage 11 for storing a global counter GC. In the extended object store 12 a unique identification $UID_i$, a stamp $C_i$ and an entry $ENTRY_i$ are stored. The unique identification $UID_i$ compares to the local unique identification $LUID_i$ of Fig. 1. The stamp $C_i$ of Fig. 2 preferably differs from the global counter $CC_i$ in Fig. 1.

Fig. 3 shows an alternative embodiment of the client device 10 in Fig. 2. The client device 20 shown in Fig. 3 comprises a log 21, an object store 22 and storage 11 for a global counter.

The client devices 1, 10, 20 in Fig. 1, 2 and 3 are preferably small portable devices.

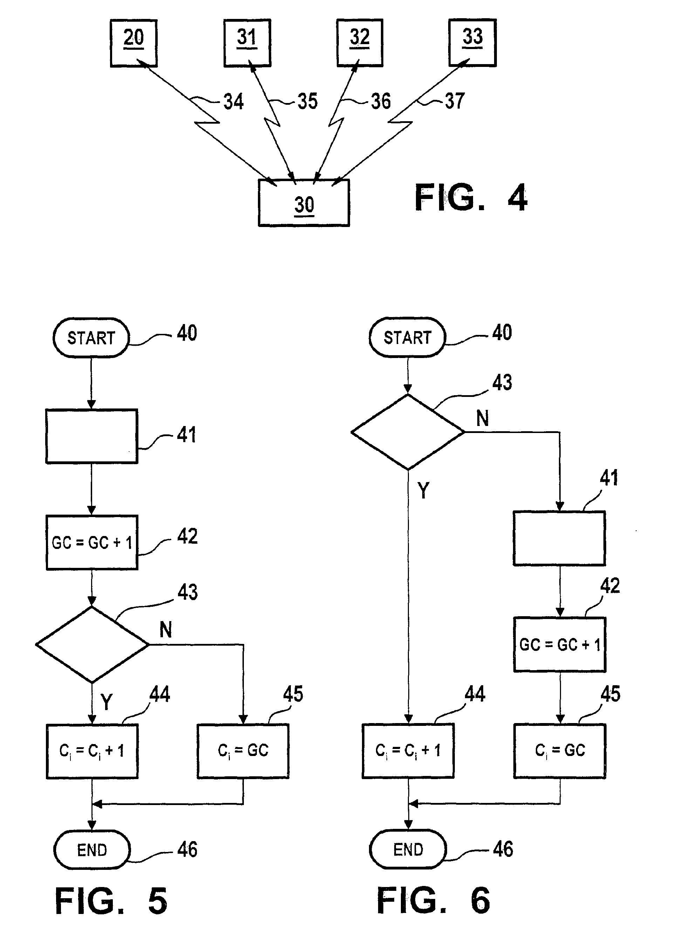

Fig. 4 shows four client devices 20, 31, 32 and 33 which can exchange information with a server device 30 via communication links 34, 35, 36 or 37. The communication links 34, 35, 36 or 37 are preferably wireless communication links, preferably infrared communication links.

The client devices 10 and 20 shown in Fig. 2 and 3 are advantageous over the client device 1 in Fig. 1 because they allow more data to be stored with the same amount of memory being implemented on the client device. No action

variable ACTION$_i$ is used but a global counter CG. There is also no need for a timesstamp TS$_i$. It is also possible to save memory when storing the stamp C$_i$ since the client devices 10 and 20 only need one or two bytes for storing the stamp C$_i$. The logs 10 and 20 in Fig. 2 and Fig. 3 comprise the change unit for changing, deleting or adding entries ENTRY; to the extended object store 12 or the object store 22 respectively.

Fig. 5 and 6 show flow charts which are preferably implemented on the change unit 23. Reference number 40 indicates the start of the flow and reference number 46 the end of the flow chart. In Fig. 5 first a step 41 is carried out. In step 41 the global counter GC is read. In a next step 42 the global counter is incremented by 1. Step 42 is followed by a decision block 43 for deciding whether ENTRY$_i$ exists. If ENTRY$_i$ exists the decision block 43 is followed by a step 44 incrementing the stamp C$_i$ of ENTRY$_i$ by 1. If ENTRY$_i$ does not exist the decision block 43 is followed by a step 45 creating a stamp C$_i$ corresponding to ENTRY$_i$ and assigning to it the value of the global counter: C$_i$ = GC. After step 45 is carried out the program is terminated.

Fig. 6 shows an alternative flow chart to Fig. 5. The flow chart also contains the decision block 43 and the steps 41, 42, 44 and 45. However, the decison block 43 and the steps 41 and 42 are arranged in a different order. Steps 41 and 42 are carried out only if ENTRY$_i$ does not exist.

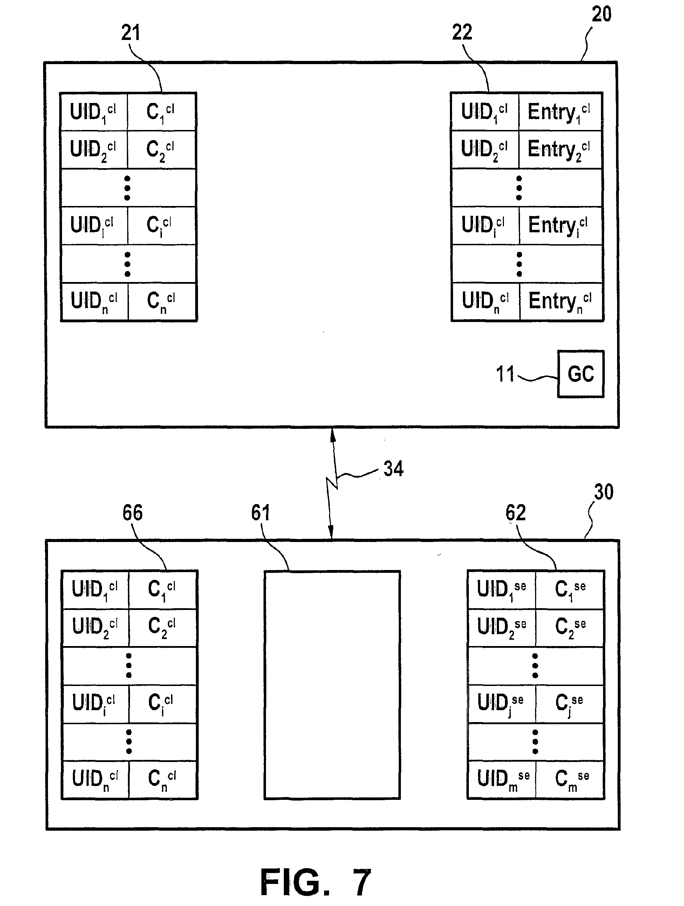

Fig. 7 shows the client device 20, referred to in the following as first client device. Fig. 7 shows the server 30 and the communication link 31. In order to identify the unique identification UID$_i$, the stamp C$_i$, and the entry ENTRY$_i$ of the first client device 20, the "$^{cl}$" is added to these variables to show that they originate from the first client device. The server device comprises a log 62 comprising unique UID UID$_j^{se}$ and stamps C$_j^{se}$. The server device 30 further comprises the decision unit 61 for deciding whether an entry ENTRY$_i^{cl}$ of the first client device 20 should be synchronized.

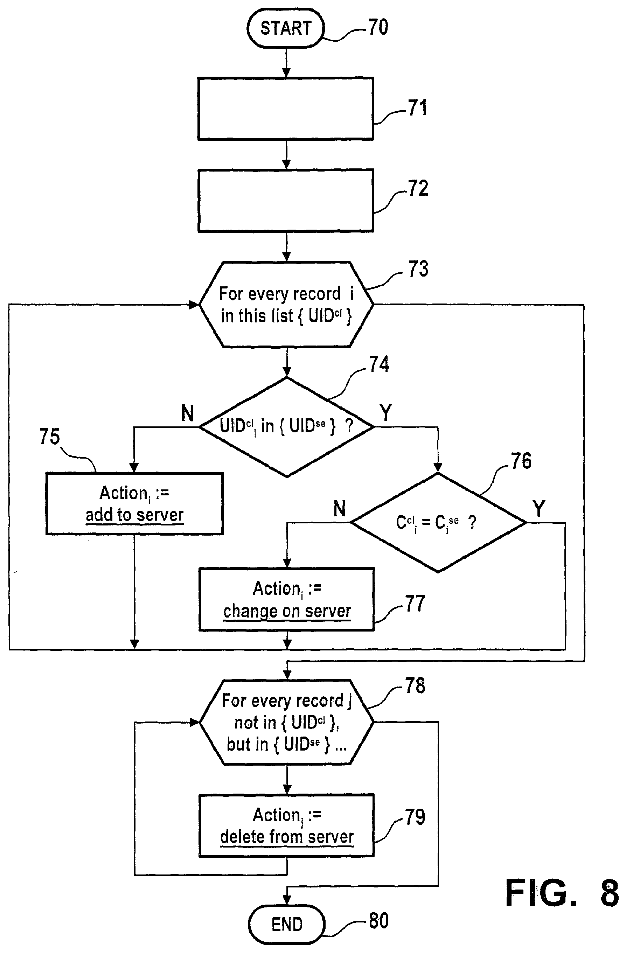

The combination of concept of the global counter CG and the concept of the decision unit is very advantageous over the IrMC specification since it cuts down memory requirements significantly. This is especially true if combined with the synchronization method according to the present invention, especially with its preferred embodiment shown in Fig. 7 and 8.

Fig. 8 shows a flow chart being preferably implemented on the decision unit 61. In Fig. 8 reference number 70 indicates the beginning of the flow chart chart. It starts with a step 71 in that either the server device 30 sends a synchronization command to the first client device 20 or receives a synchronization request from the first client device 20. Step 71 is followed by a step 72 where the server device 30 receives a list of all (UID$_i^{cl}$, C$_i^{cl}$) pairs. In this particular case this means that the log 21 of the first client device 20 is copied to the server device 30. The copy of the log 21 is referred to as charge log 66 in Fig. 7. Step 72 is followed by loop 73 comprising the decision blocks 74 and 76 and steps 75 and 77. This loop is carried out for every UID$_i^{cl}$. The loops starts with a decision block asking whether a particular UID$_i^{cl}$ is found in the list UID$^{se}$, i.e. in the charge log 62. If UID$_i^{cl}$ is not found in the charge log 62 then an action variable ACTION; is created in a step 75. The action variable ACTION$_i$ is assigned to an action "add to server". If UID$_i^{cl}$ is found in the log 62 decision block 74 is followed by a decision block 76.

With decision block 76 it is decided whether C$_i^{cl}$ = C$_i^{se}$. If C$_i^{cl}$ does not equal C$_i^{se}$ an action variable ACTION$_i$ is created in a step 77. This action variable ACTION$_i$ is assigned to the action "change and server".

The loop 73 is followed by a loop 78. Loop 78 is carried out for every UID$^{se}$ j not in the list UID$^{cl}$ but in the list UID$^{se}$. For all these records an action variable ACTION$_j$ is created and assigned to an action "deleted from server".

In case the action variable ACTIONS is assigned to the action "delete from server" UID$_j^{se}$ and C$_j^{se}$ are deleted. Furthermore, the server device 30 recommends deleting all corresponding entries from the object stores of the other clients.

If the action variable ACTION$_i$ is assigned to the action "add to server" a new UID$^{se}$ and a new C$_x^{se}$ are created and added to log 62, wherein UID$_x^{se}$ = UID$_i^{cl}$ and C$_x^{se}$ = C$_i^{cl}$. Furthermore ENTRY$_i^{cl}$, DID$_i^{cl}$ as well as C$_i^{cl}$ are transferred to the other clients and added to their corresponding object stores. Alternatively transfer and adding to databases are just requested.

If the action variable ACTION$_i$ is assigned to the action " change on server" C$_i^{se}$ is assigned to the value of C$_i^{cl}$. Furthermore ENTRY$_i^{cl}$ is transferred from client device 20 to the other client devices to replace the corresponding ENTRY$_i$ in their object stores. Alternatively transferring and replacement of the corresponding entries ENTRY$_i$ is just requested.

The invention is advantageous over the known IrMC specification in terms of memory required for storage and speed of synchronization since it cuts down on the amount of information necessary to send for synchronization. The difference $\Delta s$ between the storage requirements of IrMC and the present invention can be estimated according to

$$\Delta S = L(HL_{comp}) + M_0 \cdot CL_{comp} - \left(L(CC) \cdot (n+1)\right)$$

wherein

L( )      means length of

$HL_{comp}$    is the header of the change log according to the IrMC participation being stored in a compressed format.

$CL_{comp}$    is the change counter, the timestamp, or the change counter and the timestamp according to the IrMC specification being stored in a compressed format.

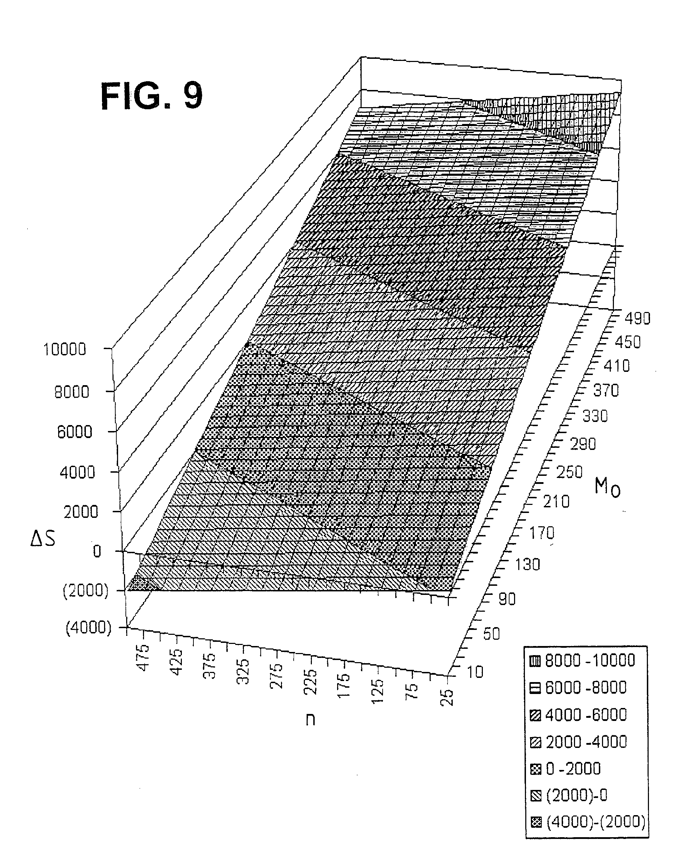

This relationship is shown in Fig. 9.

The difference $\Delta C$ between the bytes needed to be sent according to the IrMC standard and the present invention may be estimated via

$$\Delta C = L(HL_{text}) + M \cdot CL_{text} - n \cdot \left(L(CC) + L(UID)\right)$$

wherein

$HL_{text}$    is the header of the change log according to the IrMC specification being stored in a noncompressed format.

$CL_{text}$    is the change counter, the timestamp, or the change counter and the timestamp according to the IrMC specification being stored in a noncompressed format.

M      is the number of changed entries

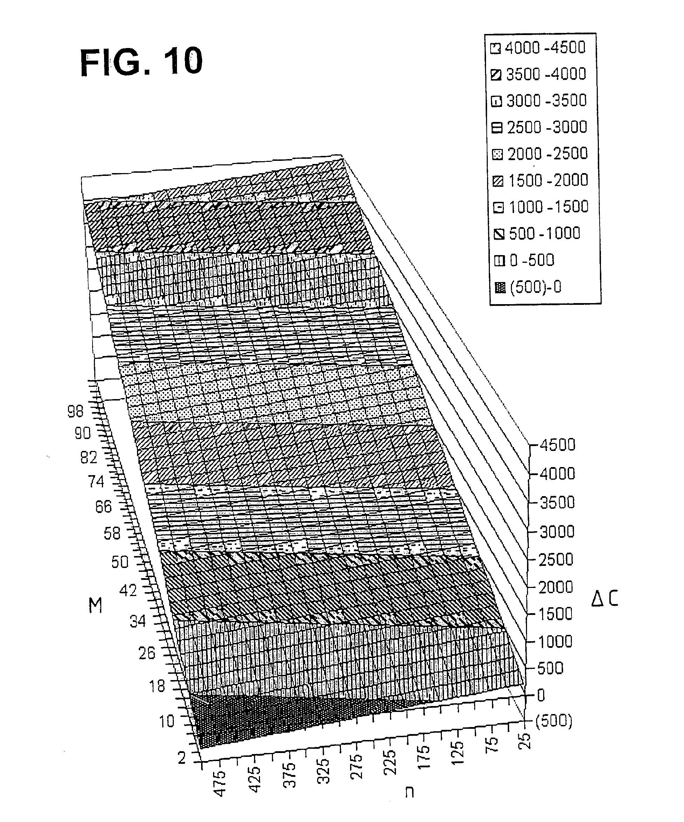

This relationship in shown in Fig. 10.

**Claims**

1. Method for synchronizing a first database (12, 22) stored on a first client device (10, 20) with a second database stored on a second client device (31, 32, 33) by sending entries ($ENTRY_1^{cl}$, $ENTRY_2^{cl}$, ... , $ENTRY_i^{cl}$ ,..., $ENTRY_n^{cl}$) of the first database (12, 22) from the first client device (10, 20) to the second client device (31, 32, 33) or a server device (30),
   **characterized in that**
   a determination is made as to whether an entry ($ENTRY_i^{cl}$) needs to be synchronized before sending off the entry ($ENTRY_i^{cl}$) from the first client device (10, 20).

2. Method according to Claim 1,
   **characterized in that**
   the entry ($ENTRY_i^{cl}$) is sent off from the first client device (10, 20) if it needs to be synchronized.

3. Method according to Claim 1 or 2, wherein each entry ($ENTRY_i^{cl}$) of the first database (12, 22) is related to a respective stamp ($C_i^{cl}$),
   **characterized in that**
   the stamps ($C_1^{cl}$, $C_2^{cl}$, ... , $C_i^{cl}$ ,..., $C_n^{cl}$) are transferred from the first client device (10, 20) to the server device (30) without their related entries ($ENTRY_1^{cl}$, $ENTRY_2^{cl}$, ... , $ENTRY_i^{cl}$ ,..., $ENTRY_n^{cl}$).

4. Method for synchronizing a first database (12, 22) being stored on a first client device (10, 20) with a second database being stored on a second client device, wherein each entry ($ENTRY_i^{cl}$) of the first database (12, 22) is related to a respective stamp ($C_i^{cl}$),
   **characterized in that**
   the stamps ($C_1^{cl}$, $C_2^{cl}$, ... , $C_i^{cl}$ ,..., $C_n^{cl}$) are transferred from the first client device (10, 20) to a server device (30) without their related entries ($ENTRY_1^{cl}$, $ENTRY_2^{cl}$, ... , $ENTRY_i^{cl}$ ,..., $ENTRY_n^{cl}$).

5. Method according to Claim 4,
   **characterized in that**
   after the stamps ($C_1^{cl}$, $C_2^{cl}$, ... , $C_i^{cl}$ ,..., $C_n^{cl}$) have been transferred a determination is made as to whether an entry ($ENTRY_i^{cl}$) needs to be synchronized and the entry ($ENTRY_i^{cl}$) is sent off from the first client device (10, 20) if it needs to be synchronized.

6. Method according to Claim 1, 2, 3 or 5,
   **characterized in that**

the entry ($ENTRY_i^{cl}$) is not sent off from the first client device (10, 20), if the entry ($ENTRY_i^{cl}$) does not need to be synchronized.

7. Method according to Claim 1, 2, 3, 5 or 6,
   **characterized in that**
   said determination is made based upon the value of the stamp ($C_i^{cl}$) being related to the entry ($ENTRY_i^{cl}$) of the first database (12, 22) and the value of the stamp ($C_i^{se}$) being related to the entry of the first database (12, 22) at a former stage.

8. Method according to Claim 7,
   **characterized in that**
   the entry ($ENTRY_i^{cl}$) of the first database (12, 22) is transferred to the server device (30) or the second client device (31, 32, 33), if the value of the stamp ($C_i^{cl}$) that is related to the entry ($ENTRY_i^{cl}$) of the first database (12, 22) differs from the value of the stamp ($C_i^{se}$) that is related to the entry of the first database (12, 22) at a former stage.

9. Method according to Claim 1, 2, 3, 5, 6, 7, or 8,
   **characterized in that**
   said transferring of the entry ($ENTRY_i^{cl}$) of the first database (12, 22) from the first client device (10, 20) to the server device (30) is done via a wireless communication link.

10. Method according to Claim 9,
    **characterized in that**
    said transferring of the entry ($ENTRY_i^{cl}$) of the first database (12, 22) from the first client device (10, 20) to the server device (30) is done via an infrared communication link.

11. Method according to Claim 1, 2, 3, 5, 6, 7, 8, 9 or 10,
    **characterized in that**
    said transferring of the entry ($ENTRY_i^{cl}$) of the first database (12, 22) from the first client device (10, 20) to the second client device (31, 32, 33) is done by transferring the entry ($ENTRY_i^{cl}$) from the first client device to the server device (30) and transferring the entry ($ENTRY_i^{cl}$) from the server device (30) to the second client device (31, 32, 33).

12. First client device (10, 20) with a first database, wherein an entry ($ENTRY_i^{cl}$) of the first database (12, 22) can be related to an entry of a second database stored on a second client device, and wherein entries ($ENTRY_1^{cl}$, $ENTRY_2^{cl}$, ... , $ENTRY_i^{cl}$ ,..., $ENTRY_n^{cl}$) of the first database (12, 22) and entries of the second database can be synchronized by applying a method according to one of the Claims 1 through 11,
    **characterized in that**
    said first client divice comprises a global counter (GC) and a change unit (23) for changing the global counter (GC) every time an entry ($ENTRY_i^{cl}$) of the first database (12, 22) is changed.

13. First client according Claim 12,
    **characterized in that**
    said first client device (10, 20) is a cell phone.

14. Server device (30) capable of receiving entries ($ENTRY_1^{cl}$, $ENTRY_2^{cl}$, ... , $ENTRY_i^{cl}$ ,..., $ENTRY_n^{cl}$) of a first database (12, 22) from a first client device (10, 20), wherein an entry ($ENTRY_i^{cl}$) of the first database (12, 22) can be related to an entry of a second database stored on a second client device, and wherein entries ($ENTRY_1^{cl}$, $ENTRY_2^{cl}$, ... , $ENTRY_i^{cl}$ ,..., $ENTRY_n^{cl}$) of the first database (12, 22) and entries of the second database can be synchronized by applying a method according to one of the Claims 1 through 11,
    **characterized in that**
    said server device (30) comprises a decision unit (61) for determining whether an entry ($ENTRY_i^{cl}$) is needed to synchronize the first and the second database.

15. Server device (30) according to Claim 14,
    **characterized in that**
    said server device (30) comprises a log (62) for storing a respective stamp ($C_i^{se}$) for every entry of the first database (12, 22) at a former stage.

**16.** Server device (30) according to Claim 14 or 15, **characterized in that** said server device (30) is a personal computer.

| | 2 | | | 3 | | | 4 | | 1 |

| LUID$_1$ | Entry$_1$ |
|----------|-----------|
| LUID$_2$ | Entry$_2$ |
| ⋮ | |
| LUID$_n$ | Entry$_n$ |

| LUID$_1$ | CC$_1$ | TS$_1$ | Action$_1$ |
|----------|--------|--------|------------|
| LUID$_2$ | CC$_2$ | TS$_2$ | Action$_2$ |
| ⋮ | | | |
| LUID$_n$ | CC$_n$ | TS$_n$ | Action$_n$ |

## FIG. 1

| | 12 | | 10 |

| UID$_1$ | C$_1$ | Entry$_1$ |
|---------|-------|-----------|
| UID$_2$ | C$_2$ | Entry$_2$ |
| ⋮ | | |
| UID$_n$ | C$_n$ | Entry$_n$ |

23

11 — GC

## FIG. 2

| | 21 | 22 | | 20 |

| UID$_1$ | C$_1$ |
|---------|-------|
| UID$_2$ | C$_2$ |
| ⋮ | |
| UID$_n$ | C$_n$ |

| UID$_1$ | Entry$_1$ |
|---------|-----------|
| UID$_2$ | Entry$_2$ |
| UID$_n$ | Entry$_n$ |

23

11 — GC

## FIG. 3

## FIG. 4

## FIG. 5

START — 40

□ — 41

$GC = GC + 1$ — 42

◇ — 43 N

Y — 44

$C_i = C_i + 1$

$C_i = GC$ — 45

END — 46

## FIG. 6

START — 40

◇ — 43 N

Y

□ — 41

$GC = GC + 1$ — 42

$C_i = C_i + 1$ — 44

$C_i = GC$ — 45

END — 46

9

EP 1 128 279 A1

| | |
|---|---|
| $UID_1^{cl}$ | $C_1^{cl}$ |
| $UID_2^{cl}$ | $C_2^{cl}$ |
| ⋮ | |
| $UID_i^{cl}$ | $C_i^{cl}$ |
| ⋮ | |
| $UID_n^{cl}$ | $C_n^{cl}$ |

21

| | |
|---|---|
| $UID_1^{cl}$ | $Entry_1^{cl}$ |
| $UID_2^{cl}$ | $Entry_2^{cl}$ |
| ⋮ | |
| $UID_i^{cl}$ | $Entry_i^{cl}$ |
| ⋮ | |
| $UID_n^{cl}$ | $Entry_n^{cl}$ |

22    20

11    GC

34

| | |
|---|---|
| $UID_1^{cl}$ | $C_1^{cl}$ |
| $UID_2^{cl}$ | $C_2^{cl}$ |
| ⋮ | |
| $UID_i^{cl}$ | $C_i^{cl}$ |
| ⋮ | |
| $UID_n^{cl}$ | $C_n^{cl}$ |

66    61

| | |
|---|---|
| $UID_1^{se}$ | $C_1^{se}$ |
| $UID_2^{se}$ | $C_2^{se}$ |
| ⋮ | |
| $UID_j^{se}$ | $C_j^{se}$ |
| ⋮ | |
| $UID_m^{se}$ | $C_m^{se}$ |

62    30

FIG. 7

START — 70

□ — 71

□ — 72

For every record i
in this list { $UID^{cl}$ } — 73

$UID^{cl}_i$ in { $UID^{se}$ } ? — 74

N

$Action_i :=$
add to server — 75

Y

$C^{cl}_i = C^{se}_i$ ? — 76

N

Y

$Action_i :=$
change on server — 77

For every record j
not in { $UID^{cl}$ },
but in { $UID^{se}$ } ... — 78

$Action_j :=$
delete from server — 79

END — 80

**FIG. 8**

# FIG. 9

# FIG. 10

# EP 1 128 279 A1

**European Patent Office**

## EUROPEAN SEARCH REPORT

Application Number

EP 00 10 3954

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | ROBERT K. LOCKHART, ET AL.: "Specifications for Ir Mobile Communications" 1 January 1999 (1999-01-01) , INFRARED DATA ASSOCIATION XP002155443 Chapter 5 * page 36, line 4-29 * * page 38, paragraph 5.7.3 * --- | 1-16 | G06F17/30 |
| X | EP 0 926 608 A (NORTHERN TELECOM LTD) 30 June 1999 (1999-06-30) * column 2, line 25 - column 4, line 21; claim 1 * --- | 1-16 | |
| X | US 5 765 171 A (GEHANI NARAIN H ET AL) 9 June 1998 (1998-06-09) * column 1, line 22-31 * * column 2, line 30-40 * * column 3, line 34-45 * --- | 1-16 | |
| X | WO 99 64966 A (MALLIA CHRYSSOULA ;BRITISH TELECOMM (GB); EIJL CLEOLA ANGELINA VAN) 16 December 1999 (1999-12-16) * page 5, line 12 - page 6, line 30 * ----- | 1-16 | TECHNICAL FIELDS SEARCHED (Int.Cl.7) G06F |

The present search report has been drawn up for all claims

| Place of search | Date of completion of the search | Examiner |
|---|---|---|
| THE HAGUE | 13 December 2000 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**

EP 00 10 3954

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2000

| Patent document cited in search report | | Publication date | Patent family member(s) | Publication date |
|---|---|---|---|---|
| EP 0926608 | A | 30-06-1999 | NONE | |
| US 5765171 | A | 09-06-1998 | US 6098078 A | 01-08-2000 |
| WO 9964966 | A | 16-12-1999 | NONE | |

EPO FORM P0459

For more details about this annex : see Official Journal of the European Patent Office, No. 12/82